# EUROPEAN PATENT APPLICATION

(11) **EP 4 184 989 A1**
(43) Date of publication of application: **24.05.2023**
(21) Application number: 21871170.3
(22) Date of filing: 23.08.2021
(51) Int. Cl.: H04W 24/02, H04W 48/20

(54) **METHOD AND SYSTEM FOR DYNAMICALLY TRIGGERING ACCESS AND MOBILITY POLICY CHANGE**

(30) Priority: 28.09.2020 CN 202011041147
(71) Applicant: China Telecom Corporation Limited, Beijing 100033 (CN)
(72) Inventor: LIU, Jiayifan, Beijing 100033 (CN); LONG, Biao, Beijing 100033 (CN); CHEN, Zhuoyi, Beijing 100033 (CN); SUN, Yue, Beijing 100033 (CN); LIU, Liu, Beijing 100033 (CN); LI, Mingxue, Beijing 100033 (CN); ZHANG, Linfeng, Beijing 100033 (CN); WANG, Qingyang, Beijing 100033 (CN); ZHAO, Ye, Beijing 100033 (CN); WANG, Bo, Beijing 100033 (CN); CAO, Lei, Beijing 100033 (CN)
(74) Representative: Sadler, Peter Frederick
(86) International application number: PCT/CN2021/114051
(87) International publication number: WO 2022/062797

(57) **Abstract**

The present disclosure provides a method and system for dynamically triggering an access and mobility (AM) policy change. The method for dynamically triggering AM policy change comprises : when a predetermined application is started or terminated, an AF generates an AM policy grant update request, the AM policy grant update request comprising identification information associated with the application; the AF sends the AM policy grant update request to a PCF entity by means of an NEF entity; the PCF entity obtains a policy parameter associated with the identification information; the PCF entity sends an AM policy identifier and the policy parameter to an access network side device by means of an AMF entity; the access network side device performs corresponding radio resource scheduling according to the policy parameter.

## Description

### CROSS-REFERENCE TO RELATED APPLICATIONS

This application is based on and claims priority from CN application No. 202011041147.7, filed on September 28, 2020, the disclosure of hereby incorporated into this disclosure by reference in its entirety.

### TECHNICAL FIELD

The present disclosure relates to the field of mobile communications, and in particular, to a method and a system for dynamically triggering to change an access and mobility policy.

### BACKGROUND

An AM (Access and Mobility) policy comprises management of a SAR (Service Area Restrictions), a RFSP (RAT/Frequency Selection Priority), UE-AMBR (UE Aggregated Maximum Bitrate), etc., wherein the RFSP allows a network to direct a specific service to a specific radio access resource.

Different application programs have different requirements on wireless resources, for example, 5G services such as AR (Augmented Reality)/VR (Virtual Reality) which have high requirements on rate and delay are suggested to select high-frequency wireless resources, while services which have high requirements on mobility and want to avoid frequent switching would select low-frequency wireless resources (large coverage), thus that AM policies of different services are often different, thereby resulting in a requirement that the application programs dynamically trigger to change the AM policy. For example, in the 3GPP (3rd Generation Partnership Project) R16 version standard, an application can dynamically trigger to change a SM (Session Management) policy.

### SUMMARY

According to a first aspect of the embodiments of the present disclosure, there is provided a method for dynamically triggering to change an access and mobility policy, comprising: generating, by an application server AF, an AM policy authorization updating request under a condition that a preset application starts or terminates, wherein the AM policy authorization updating request comprises identification information associated with the application; sending, by the AF, the AM policy authorization updating request to a policy control function PCF entity through a network exposure function NEF entity; acquiring, by the PCF entity, a policy parameter associated with the identification information; sending, by the PCF entity, an AM policy identifier and the policy parameter to an access network side device through an access and mobility management function AMF entity; and scheduling, by the access network side device, a wireless resource corresponding to the policy parameter.

In some embodiments, the identification information comprises a user equipment identity and an application identity.

In some embodiments, the acquiring, by the PCF entity, the policy parameter associated with the identification information comprises at least one of: acquiring, by the PCF entity, an RFSP index value associated with the identification information; or acquiring, by the PCF entity, operator configuration information associated with the identification information.

In some embodiments, the AM policy identifier is in a one to one correspondence with the user equipment identity.

According to a second aspect of the embodiments of the present disclosure, there is provided a system for dynamically triggering to change access and mobility policy, comprising: an application server AF configured to generate an AM policy authorization updating request under a condition that a preset application starts or terminates, wherein the AM policy authorization updating request comprises identification information associated with the application, and send the AM policy authorization updating request to a policy control function PCF entity through a network exposure function NEF entity; the NEF entity configured to send the AM policy authorization updating request to the PCF entity; the PCF entity configured to acquire a policy parameter associated with the identification information, and send an AM policy identifier and the policy parameter to the an access and mobility management function AMF entity; the AMF entity configured to send the AM policy identifier and the policy parameter to an access network side device; the access network side device configured to schedule a wireless resource corresponding to the policy parameter.

In some embodiments, the identification information comprises a user equipment identity and an application identity.

In some embodiments, the PCF entity is configured to perform at least one of the following operations: acquire an RFSP index value associated with the identification information; or acquire operator configuration information associated with the identification information.

In some embodiments, the AM policy identifier is in a one to one correspondence with the user equipment identity.

According to a third aspect of the embodiments of the present disclosure, there is provided a method for dynamically triggering to change an access and mobility policy by a policy control function PCF entity, comprising: extracting identification information associated with an application from a received AM policy authorization updating request; acquiring a policy parameter associated with the identification information; sending an AM policy identifier and the policy parameter to an access network side device through an access and mobility management function AMF entity, thereby the access network side device scheduling a wireless resource corresponding to the policy parameter.

In some embodiments, the identification information comprises a user equipment identity and an application identity.

In some embodiments, the acquiring a policy parameter associated with the identification information comprises at least one of: acquiring an RFSP index value associated with the identification information; or acquiring operator configuration information associated with the identification information.

In some embodiments, the AM policy identifier is in a one to one correspondence with the user equipment identity.

According to a fourth aspect of the embodiments of the present disclosure, there is provided a policy control function entity, comprising: a processor; and a memory coupled to the processor, storing program instructions which, when executed by the processor, cause the processor to implement the method according to any one of the embodiments described above.

According to a fifth aspect of the embodiments of the present disclosure, there is provided a computer readable storage medium storing computer instructions which, when executed by a processor, implement the method according to any one of the embodiments described above.

Other features of the present disclosure and advantages thereof will become apparent from the following detailed description of exemplary embodiments thereof, which proceeds with reference to the accompanying drawings.

### BRIEF DESCRIPTION OF THE DRAWINGS

The accompanying drawings, which are incorporated in and constitute a part of this specification, illustrate embodiments of the disclosure and together with the description, serve to explain the principles of the disclosure.

The present disclosure may be more clearly understood from the following detailed description taken in conjunction with the accompanying drawings, in which:
Fig. 1 is a flowchart illustrating a method for dynamically triggering to change the access and mobility policy according to one embodiment of the present disclosure;
Fig. 2 is a schematic structural diagram of a system for dynamically triggering to change the access and mobility policy according to one embodiment of the present disclosure;
Fig. 3 is a flowchart illustrating a method for dynamically triggering to change the access and mobility policy change according to another embodiment of the disclosure;
Fig. 4 is a schematic structural diagram of a PCF entity according to one embodiment of the present disclosure;
Fig. 5 is a flowchart illustrating a method for dynamically triggering to change the access and mobility policy according to another embodiment of the disclosure.

It should be understood that the dimensions of the various parts shown in the drawings are not drawn to scale. Further, the same or similar reference numerals denote the same or similar components.

### DETAILED DESCRIPTION

Various exemplary embodiments of the present disclosure will now be described in detail with reference to the accompanying drawings. The description of the exemplary embodiments is merely illustrative and is in no way intended to limit the disclosure, its application, or uses. The present disclosure may be embodied in many different forms and is not limited to the embodiments described herein. These embodiments are provided so that this disclosure will be thorough and complete, and will fully convey the scope of the disclosure to those skilled in the art. It should be noted that: the relative arrangement of parts and steps, the composition of materials and values set forth in these embodiments are to be construed as illustrative only and not as limiting unless otherwise specifically stated.

The use of "including" or "comprising" and the like in this disclosure is intended to mean that the elements preceding the word encompass the elements listed after the word and does not exclude the possibility that other elements may also be encompassed.

All terms (including technical or scientific terms) used herein have the same meaning as commonly understood by one of ordinary skill in the art to which this disclosure belongs unless specifically defined otherwise. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Techniques, methods, and apparatus known to one of ordinary skill in the relevant art may not be discussed in detail but are intended to be part of the specification where appropriate.

The inventors found through research that in the related art, an application program can only dynamically trigger to change a SM policy, but ignores the problem that the application program dynamically triggers to change an AM policy.

Therefore, the present discloses provides a scheme for dynamically triggering to change the access and mobility policy, which effectively fills the blank that the service of the application program dynamically triggers to change the AM policy.

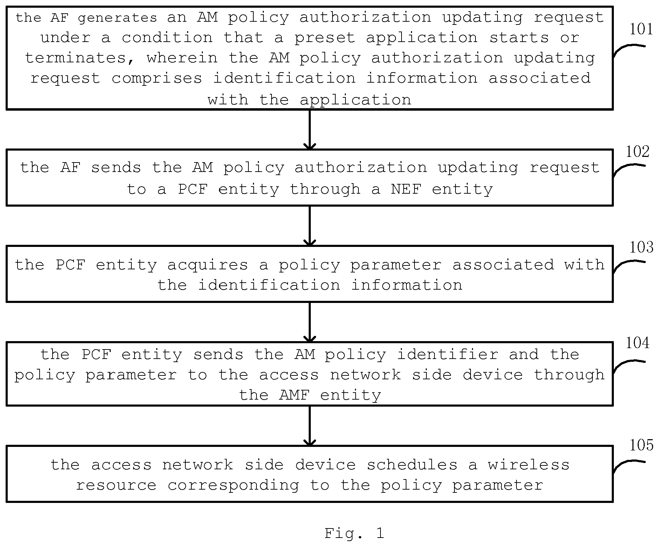

Fig. 1 is a flowchart illustrating a method for dynamically triggering to change the access and mobility policy according to one embodiment of the present disclosure.

In step 101, an AM policy authorization updating request is generated by an AF (Application Function server) under a condition that a preset application starts or terminates, wherein the AM policy authorization updating request comprises identification information associated with the application.

In some embodiments, the identification information associated with the application comprises a UE (User Equipment) ID, an APP (Application) ID. In other embodiments, the identification information further comprises an ASP (Application Service Provider) ID.

In step 102, the AM policy authorization updating request is sent by the AF to a PCF (Policy Control Function) entity through a NEF (Network Expose Function) entity.

In step 103, a policy parameter associated with the identification information is acquired by the PCF entity.

In some embodiments, the PCF entity queries out the policy parameter associated with the identification information using a locally preset mapping table. The mapping table comprises at least one of a RFSP mapping table or a SAR mapping table.

In some embodiments, the PCF entity acquires a RFSP index value associated with the identification information. For example, the PCF entity queries out the RFSP index value associated with the identification information using the RFSP mapping table. The RFSP mapping table is shown in table 1.

**TABLE 1**

| UE ID | APP ID | ASP ID | RFSP INDEX VALUE |
|---|---|---|---|
| UE1 | APP1 | ASP1 | X |
| UE2 | APP2 | ASP2 | Y |
| ... | ... | ... | ... |

In some embodiments, the PCF entity acquires operator configuration information associated with the identification information. For example, the PCF entity queries out the operator configuration information associated with the identification information using the SAR mapping table. The SAR mapping table is shown in TABLE 2.

**TABLE 2**

| UE ID | APP ID | ASP ID | TA LIST |
|---|---|---|---|
| UE1 | APP1 | ASP1 | P |
| UE2 | APP2 | ASP2 | Q |
| ... | ... | ... | ... |

In step 104, an AM policy identifier and the policy parameter are sent by the PCF entity to the access network side device through the access and mobility management function AMF entity.

In some embodiments, the AM policy identifier is in a one to one correspondence with the UE ID. For example, a mapping relation of the AM policy identifier and UE ID is stored in the PCF entity. The PCF entity queries the AM policy identifier corresponding to the UE ID by using the mapping relation.

In step 105, a wireless resource corresponding to the policy parameter is scheduled by the access network side device.

For example, the access network side device may be an AN (Access Network) side device or a RAN (Radio Access Network) side device.

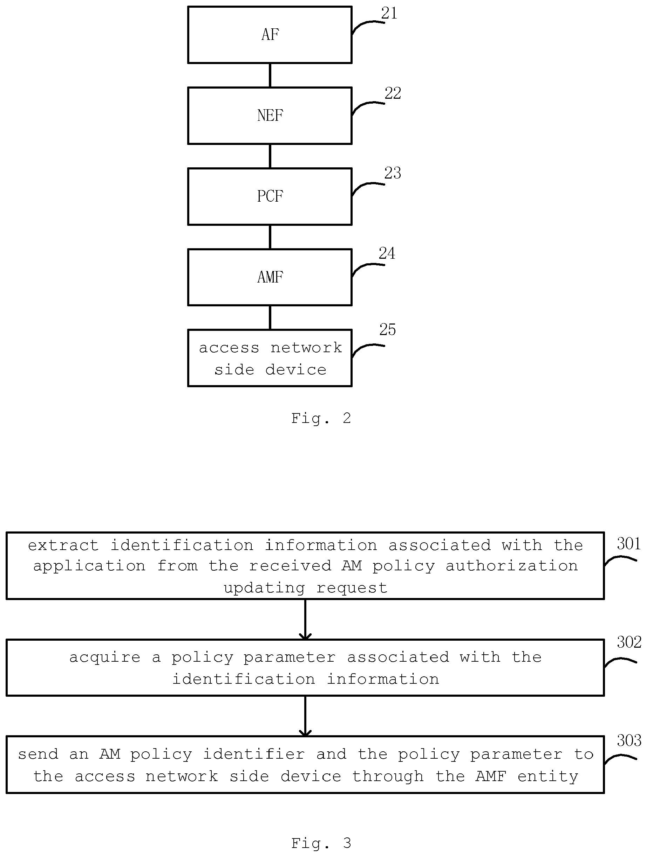

Fig. 2 is a schematic structural diagram of a system for dynamically triggering to change access and mobility policy according to one embodiment of the present disclosure. As shown in Fig. 2, the system comprises an AF 21, a NEF entity 22, a PCF entity 23, an AMF entity 24, and an access network side device 25.

The AF 21 is configured to generate an AM policy authorization updating request under a condition that a preset application starts or terminates, wherein the AM policy authorization updating request comprises identification information associated with the application. The AF 21 also sends the AM policy authorization updating request to the network exposure function NEF entity.

In some embodiments, the identification information associated with the application comprises a UE ID and an APP ID. In other embodiments, the identification information further comprises an ASP ID.

The NEF entity 22 is configured to send the AM policy authorization updating request to the PCF entity.

The PCF entity 23 is configured to acquire a policy parameter associated with the identification information.

In some embodiments, the PCF entity 23 is configured to query out the policy parameter associated with the identification information using a locally preset mapping table. The mapping table comprises at least one of a RFSP mapping table or a SAR mapping table.

In some embodiments, the PCF entity acquires the RFSP index value associated with the identification information. For example, the PCF entity queries out the RFSP index value associated with the identification information using the RFSP mapping table. The RFSP mapping table is shown in TABLE 1.

In some embodiments, the PCF entity acquires operator configuration information associated with the identification information. For example, the PCF entity queries out the operator configuration information associated with the identification information using the SAR mapping table. The SAR mapping table is shown in TABLE 2.

The PCF entity 23 is configured to send an AM policy identifier and the policy parameter to the access and mobility management function AMF entity.

In some embodiments, the AM policy identifier is in a one to one correspondence with the UE ID. For example, a mapping relation of the AM policy identifier and UE ID is stored in the PCF entity. The PCF entity 23 queries out the AM policy identifier corresponding to the UE ID by using the mapping relation.

The AMF entity 24 is configured to send the AM policy identifier and the policy parameter to the access network side device.

The access network side device 25 is configured to schedule a wireless resource corresponding to the policy parameter.

For example, the access network side device may be an AN side device or a RAN side device.

Fig. 3 is a flowchart illustrating a method of dynamically triggering to change an access and mobility policy according to another embodiment of the disclosure. In some embodiments, the following method for dynamically triggering to change an access and mobility policy is performed by the PCF entity.

In step 301, identification information associated with an application is extracted from a received AM policy authorization updating request.

In some embodiments, the identification information comprises a user equipment identity and an application identity.

In step 302, a policy parameter associated with the identification information is acquired.

In some embodiments, the step 302 comprises at least one of: acquiring an RFSP index value associated with the identification information; or acquiring operator configuration information associated with the identification information.

In step 303, an AM policy identifier and the policy parameter are sent to the access network side device through the access and mobility management function AMF entity, thereby the access network side device scheduling a wireless resource corresponding to the policy parameter.

In some embodiments, the AM policy identifier is in a one to one correspondence with the user equipment identity.

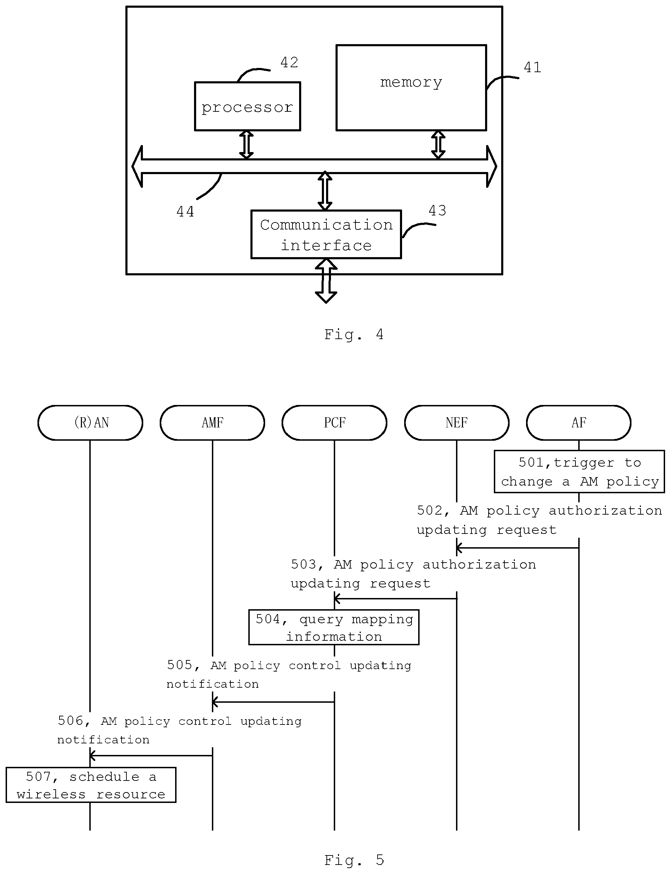

Fig. 4 is a schematic structural diagram of a PCF entity according to one embodiment of the present disclosure. As shown in Fig. 4, the PCF entity comprises a memory 41 and a processor 42.

The memory 41 is used to store instructions. The processor 42 is coupled to the memory 41. The processor 42 is configured to perform a method as described in any of the embodiments of Fig. 3, based on the instructions stored in the memory.

As shown in Fig. 4, the PCF entity also comprises a communication interface 43 for information interaction with other devices. Meanwhile, the PCF entity also comprises a bus 44, and the processor 42, the communication interface 43, and the memory 41 are in communication with each other via the bus 44.

The memory 41 may comprises a Random Access Memory (RAM) or a Non-Volatile Memory (NVM) . Such as at least one disk storage. The memory 41 may also be a memory array. The memory 41 may also be partitioned into blocks, and the blocks may be combined into virtual volumes according to certain rules.

Further, the processor 42 may be a central processing unit, or may be an ASIC (Application Specific Integrated Circuit), or one or more integrated circuits configured to implement embodiments of the present disclosure.

The present disclosure also provides a non-transitory computer readable storage medium. A non-transitory computer readable storage medium stores computer instructions which, when executed by a processor, implement the method according to any one of the embodiments in Fig. 3.

Fig. 5 is a flowchart illustrating a method for dynamically triggering to change an access and mobility policy according to another embodiment of the present disclosure.

In step 501, the AF triggers to change the AM policy under a condition that a preset application starts or terminates, and generates an AM policy authorization updating request, wherein the AM policy authorization updating request comprises at least a UE ID, an APP ID, and an ASP ID.

At step 502, the AF sends the AM policy authorization updating request to the NEF entity.

In step 503, the NEF entity sends the AM policy authorization updating request to the PCF entity.

In step 504, the PCF entity queries out the RFSP index value and TA list information associated with the UE ID, APP ID and ASP ID using a locally preset mapping table.

In step 505, the PCF entity sends an AM policy control updating notification to the AMF entity. The AM policy control updating notification comprises an AM policy identifier, as well as an RFSP index value and TA list information.

In some embodiments, the AM policy identifier is in a one to one correspondence with the user equipment identity UE ID.

In step 506, the AMF entity sends the AM policy control updating notification to the access network side device through an N2 message.

In step 507, the access network side device schedules a wireless resource corresponding to the RFSP index value and the TA list information.

For example, the access network side device may be an AN side device or a RAN side device.

Through implementing the above-mentioned embodiment of the present disclosure, the following advantageous effects can be obtained:
(1) The solution for dynamically triggering to change the AM policy changing by the application program is added in the 3GPP R16 standard;
(2) The RFSP mapping table and the SAR mapping table are added in the PCF entity, and the RFSP index value/the SAR mapping which needs to be changed can be conveniently found according to the information sent by the AF;
(3) By utilizing the NEF entity and the PCF entity, the flow becomes more reasonable and improved.

In some embodiments, the functional unit modules described above can be implemented as a general purpose processor, a programmable logic controller (PLC), a digital signal processor (DSP), an application specific integrated circuit (ASIC), a field programmable gate array (FPGA) or other programmable logic device, discrete gate or transistor logic, discrete hardware components, or any suitable combination thereof for performing the functions described in this disclosure.

It will be understood by those skilled in the art that all or part of the steps for implementing the above embodiments may be implemented by hardware, or may be implemented by a program instructing relevant hardware, where the program may be stored in a computer-readable storage medium, and the storage medium may be a read-only memory, a magnetic disk or an optical disk.

The description of the present disclosure has been presented for purposes of illustration and description, and is not intended to be exhaustive or limited to the disclosure in the form disclosed. Many modifications and variations will be apparent to practitioners skilled in this art. The embodiment was chosen and described in order to best explain the principles of the disclosure and the practical application, and to enable others of ordinary skill in the art to understand the disclosure for various embodiments with various modifications as are suited to the particular use contemplated.

## Claims

1. A method for dynamically triggering to change an access and mobility policy, comprising:
generating, by an application server AF, an AM policy authorization updating request under a condition that a preset application starts or terminates, wherein the AM policy authorization updating request comprises identification information associated with the application;
sending, by the AF, the AM policy authorization updating request to a policy control function PCF entity through a network exposure function NEF entity;
acquiring, by the PCF entity, a policy parameter associated with the identification information;
sending, by the PCF entity, an AM policy identifier and the policy parameter to an access network side device through an access and mobility management function AMF entity; and
scheduling, by the access network side device, a wireless resource corresponding to the policy parameter.

2. The method according to claim 1, wherein
the identification information comprises a user equipment identity and an application identity.

3. The method according to claim 2, wherein the acquiring, by the PCF entity, the policy parameter associated with the identification information comprises at least one of:
acquiring, by the PCF entity, an RFSP index value associated with the identification information; or
acquiring, by the PCF entity, operator configuration information associated with the identification information.

4. The method according to claim 2, wherein
the AM policy identifier is in a one to one correspondence with the user equipment identity.

5. A system for dynamically triggering to change access and mobility policy, comprising:
an application server AF configured to generate an AM policy authorization updating request under a condition that a preset application starts or terminates, wherein the AM policy authorization updating request comprises identification information associated with the application, and send the AM policy authorization updating request to a policy control function PCF entity through a network exposure function NEF entity;
the NEF entity configured to send the AM policy authorization updating request to the PCF entity;
the PCF entity configured to acquire a policy parameter associated with the identification information, and send an AM policy identifier and the policy parameter to the an access and mobility management function AMF entity;
the AMF entity configured to send the AM policy identifier and the policy parameter to an access network side device;
the access network side device configured to schedule a wireless resource corresponding to the policy parameter.

6. The system according to claim 5, wherein
the identification information comprises a user equipment identity and an application identity.

7. The system according to claim 5, wherein
the PCF entity is configured to perform at least one of the following operations: acquire an RFSP index value associated with the identification information; or acquire operator configuration information associated with the identification information.

8. The system according to claim 6, wherein
the AM policy identifier is in a one to one correspondence with the user equipment identity.

9. A method for dynamically triggering to change an access and mobility policy by a policy control function PCF entity, comprising:
extracting identification information associated with an application from a received AM policy authorization updating request;
acquiring a policy parameter associated with the identification information; and
sending an AM policy identifier and the policy parameter to an access network side device through an access and mobility management function AMF entity, thereby the access network side device scheduling a wireless resource corresponding to the policy parameter.

10. The method according to claim 9, wherein
the identification information comprises a user equipment identity and an application identity.

11. The method according to claim 10, wherein the acquiring a policy parameter associated with the identification information comprises at least one of:
acquiring an RFSP index value associated with the identification information; or
acquiring operator configuration information associated with the identification information.

12. The method according to claim 9, wherein
the AM policy identifier is in a one to one correspondence with the user equipment identity.

13. A policy control function entity, comprising:
a processor; and
a memory coupled to the processor, storing program instructions which, when executed by the processor, cause the processor to implement the method of any of claims 9-12.

14. A computer readable storage medium storing computer instructions which, when executed by a processor, implement the method of any one of claims 9-12.
